# EUROPÄISCHE PATENTSCHRIFT

(11) **EP 1 957 836 B1**
(45) Veröffentlichungstag und Bekanntmachung des Hinweises auf die Patenterteilung: **12.01.2011**
(21) Anmeldenummer: 06830029.2
(22) Anmeldetag: 17.11.2006
(51) Int. Cl.: F16H 63/32

(54) **SCHALTGABEL**
SELECTOR FORK
FOURCHETTE DE BOÎTE DE VITESSES

(30) Priorität: 03.12.2005 DE 102005057815
(43) Veröffentlichungstag der Anmeldung: 20.08.2008
(73) Patentinhaber: Schaeffler Technologies GmbH & Co. KG, 91074 Herzogenaurach (DE)
(72) Erfinder: KRÄMER, Klaus, 91460 Baudenbach (DE); PINTUS, Susanne, 91074 Herzogenaurach (DE); HAYES, Robert, 90562 Heroldsberg (DE)
(86) Internationale Anmeldenummer: PCT/EP2006/068616
(87) Internationale Veröffentlichungsnummer: WO 2007/062992

(56) Entgegenhaltungen:
- EP-A1- 1 072 826
- WO-A-01/79728
- WO-A-2005/073602
- DE-A1- 10 317 028

## Beschreibung

### Gebiet der Erfindung

Die Erfindung betrifft eine Schaltgab für ein Zahnräderwechselgetriebe, entsprechend dem Oberbegrift des Anspruchs 1.

### Hintergrund der Erfindung

In manuellen oder automatisierten Getrieben sind zwischen zwei Gangrädern, die drehbar auf einer Getriebewelle gelagert sind, ein Synchronkörper und eine Schaltmuffe angeordnet. Die Schaltmuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Gangs wird die Schaltmuffe in axialer Richtung auf eines der Gangräder verschoben, bis die Innenverzahnung in eine am Gangrad angebrachte Kupplungsverzahnung eingreift. Die Innenverzahnung der Schaltmuffe steht dann sowohl mit der Kupplungsverzahnung als auch mit der Außenverzahnung des Synchronkörpers in Eingriff. Die Schaltgabel hat die Aufgabe, eine axiale Bewegung eines Schaltgestänges auf die Schaltmuffe zu übertragen. Dabei ist die Schaltgabel zumeist axial verschiebbar auf einer Schaltstange gelagert und greift mit Mitnehmern in eine Schaltmuffennut ein.

Die Schaltgabeln bestehen aus einer Führung und einem gabelförmigen Grundkörper. Zunehmend gewinnen aus Blech hergestellte Schaltgabeln an Bedeutung, da diese sich kostengünstig und materialsparend herstellen lassen. Der Schaltgabelgrundkörper ist zumeist ein durch Kaltumformen von Blech hergestelltes Formteil. Das Formteil ist gabelförmig mit zwei zueinander beabstandeten Gabelenden ausgeführt. Die Schaltgabeln der betrachteten Gattung weisen eine Führung mit einer in der Regel zylindrisch ausgebildeten Führungsöffnung auf, wobei die Führung auf einer Schaltschiene, Schaltstange oder auf einem ähnlichen Schaltglied sitzt, so dass die Schaltgabel und das Schaltglied eine Schaltanordnung bilden. Es gibt Schaltgabeln, die längs- und zum Teil auch schwenkbeweglich auf den vorgenannten Schaltgliedern angeordnet sind. Weiterhin gibt es Schaltgabeln, die fest auf diesen Schaltgliedern sitzen und deshalb mit dem Schaltglied zusammen relativ zum Synchronkörper beweglich sind.

Führungen mit einem Festsitz auf einem der Schaltglieder sind mit einer vollständig durch die Führung hindurch verlaufenden Öffnung in Form eines Durchgangsöffnung versehen. Die Führungsöffnung verläuft alternativ dazu nur teilweise und damit in der Form eines Sacklochs. Die Führungen liegen in beliebigen Ausführungsformen und Querschnitten vor, z. B. in der Form eines Hohlprofils mit rechteckigem Querschnitt bzw. eines Hohlprofils mit innen zylindrischem und außen mit beliebigem Querschnitt oder als hohlzylindrische Hülse.

Die Verbindung zwischen dem Schaltgabelgrundkörper aus Blech und der Führung ist beispielsweise in der DE 103 09 407 A1 über eine nockenartig ausgebildete Basis hergestellt. Der Nocken ist als Verbindungsglied zwischen dem Schaltgabelgrundkörper und der Führung und/oder als Versteifungsglied für die Anbindung des Schaltgabelgrundkörpers an die Führung vorgesehen. Als Verbindungsglied stellt die Basis ausreichend Material zur sicheren Befestigung des Schaltgabelgrundkörpers, z. B. durch Schweißen, an der Führung bzw. an dem Schaltgabelgrundkörper zur Verfügung. Die nockenartige Basis versteift die Schaltgabel an der Anbindung des in der Regel relativ dünnwandigen Schaltgabelgrundkörpers gegen elastische und plastische Verformungen aus Betätigungskräften an der Schaltgabel. Die Führung ist durch eine Ringnaht an den Augen mit dem Schaltgabelgrundkörper verschweißt. Durch die nockenartige Basis und die massive Herstellung der Führung ist die Schaltgabel schwer und ihr Herstellung vergleichsweise aufwendig.

Weitere Alternativen zu einer gattungsgemäßen Schaltgabel sind in DE 101 25 098 A1 beschrieben. Dort ist zunächst eine Schaltgabel vorgesehen, bei der die

Weitere Alternativen zu einer gattungsgemäßen Schaltgabel sind in DE 101 25 098 A1 beschrieben. Dort ist zunächst eine Schaltgabel vorgesehen, bei der die Führung und eine Basis zusammen als eine Einheit einteilig und separat zum Schaltgabelgrundkörper ausgebildet sind. Weiterhin ist eine Schaltgabel, bei der die Führung, die Basis und der Schaltgabelgrundkörper jeweils als Einzelteile hergestellt und anschließend miteinander verbunden sind, vorgesehen. Die Komponenten der Schaltgabeln sind aus Blech gefertigt. Diese Konstruktionen erweisen sich unter hohen Belastungen, insbesondere an den Anbindungen der Schaltgabelgrundkörper zu den Führungen, als nicht steif genug. Vor allem in Schaltrichtung ist die Steifigkeit nicht zufriedenstellend.

DE 103 17 028 zeigt eine Schaltgabel, bei der die Schaltgabel einstückig mit einer angeformten Schaltschiene hergestellt und mit einem überdeckenden Schienenstreifen versehen wird. Die Form dieser Schaltgabel ist sehr komplex.

Die gattungsgemäße EP 1 072 826 A1 beschreibt eine Schaltgabel, deren Führung durch mehrere axial zueinander versetzt angeordnete und einteilig mit der Schaltgabel verbundene Bänder ausgebildet ist. Mittels der Bänder stützt sich die Schaltgabel an der Schaltstange jeweils nur einseitig ab, so dass die Steifigkeit vermindernde Scherkräfte auftreten.

Oft werden daher derartige, insbesondere aus Dünnblech hergestellte Schaltgabeln mit zusätzlichen Versteifungen durch Rippen, Sicken oder ähnlichem versehen oder verstärkt. Der Aufwand für die Herstellung derartiger Schaltgabeln ist hoch.

### Zusammenfassung der Erfindung

Der Erfindung liegt daher die Aufgabe zugrunde, die geschilderten Nachteile zu vermeiden und somit eine einfach zu fertigende Schaltgabel von hoher Steifigkeit in Leichtbauweise zu schaffen.

Diese Aufgabe ist mit den Merkmalen des Anspruchs 1 gelöst.

Unter einer Schaltstange im Sinne des Hauptanspruchs wird dabei auch eine Schaltschiene oder ein ähnliches Schaltglied verstanden, welches zusammen mit der Schaltgabel eine Schaltanordnung bildet. In der Schaltanordnung ist die Schaltstange entweder direkt mit der Führung oder mit einer in der Führung lage verbunden und somit hohen Kräften gewachsen ist. Das Durchgangsloch fungiert als ein Gleitsitz auf dem Schaltglied. Dabei ergibt sich eine hohe Gewichtsersparnis.

Die Führung ist entweder mit dem Schaltglied kraft-, form- oder stoffschlüssig verbunden. Dazu kann sie beispielsweise verpresst, verschweißt oder verstiftet sein. In einer Fortbildung der Erfindung ist vorgesehen, zwischen Deckblech und Auflage einen Hohlkörper als Hilfsführung anzuordnen. Dieser ist dann ebenfalls aus leichtem Blech. Dieser ermöglicht die Verwendung einer erfindungsgemäßen Schaltgabel mit verschiedenartig geformten Schaltstangen, indem er als ein Adapter wirkt. Durch die Verwendung von Gleichteilen werden somit Kostenvorteile erzielt. Weiterhin sind in diesem Fall an die Auflage keine besonders hohen Fertigungsgenauigkeiten gestellt.

In einer weiteren Fortbildung der Erfindung nimmt die Führungsöffnung ein Lager auf. Dadurch ist die Führung beweglich auf dem Schaltglied angeordnet. Das Lager ist als ein Gleitlager, beispielsweise in der Ausführung einer Gleitbuchse aus Kunststoff, oder als ein Wälzlager, z. B. mit Kugeln oder Rollen, ausgebildet.

Nach Anspruch 3 ist die Basis vorzugsweise derart gestaltet, dass sie sich im Bereich der Schaltstangenanbindung aus der Ebene der Gabelenden in axiale Richtung erstreckt. Dadurch ergibt sich für die Anbindung der Schaltstange ein großer Bereich als Auflage, in dem die Schaltstange und das Deckblech fest mit der Basis verbindbar sind und somit hohe Kräfte übertragen werden können. Gleichzeitig wird auch ein Verkippen bei der Montage vermieden. Besonders einfach ist dies durch einen topfförmig ausgebildeten Grundkörper zu realisieren, wobei der Grundkörper in einem Tiefziehvorgang hergestellt wird. Prinzipiell ist es möglich, die Basis einteilig mit dem Grundkörper auszubilden; sie kann aber auch separat von diesem hergestellt werden.

In einer weiteren Ausführungsform weist die Auflage eine axial verlaufende Nut auf, in welcher die Schaltstange in der Schaltanordnung angeordnet ist. Die Nut ermöglicht zum einen ein sicheres Führen der Schaltstange, zum anderen reduziert sie die Bauhöhe der Einheit, welche vom Deckblech bis zu den Gabelenden zu bemessen ist. Vorteilhafterweise ist sie in ihrer Form der Schaltstangenkontur angepasst.

Nach einer weiteren Fortbildung der Erfindung weist die Auflage Flanken auf, die in Richtung der Gabelenden abgewinkelt sind. Die Flanken müssen dabei nicht genau auf die Gabelenden gerichtet sein. Eine Verrundung und eine Anpassung an die erforderlichen räumlichen Gegebenheiten ist möglich. Es ist aus Steifigkeitsgründen aber vorteilhaft, dass die Flanken tangential in den gabelförmigen Grundkörper übergehen. Erfindungsgemäß ist es nicht erforderlich, dass die Flanken eben ausgebildet sind. Allerdings ist eine solche ebene Ausbildung gemäß Anspruch 6 besonders einfach zu realisieren, da dann das Deckblech, das mit den Flanken fest verbunden ist, in diesen Bereichen nicht verformt werden muss. Eine besonders einfache Ausbildung des Deckblechs ergibt sich, wenn die Flanken zueinander einen etwa rechten Winkel bilden und die Schaltstange einen kreisförmigen Querschnitt aufweist, weil dann das Deckblech in drei Abschnitte eingeteilt werden kann, von denen lediglich der mittlere Abschnitt bei seiner Herstellung umgeformt werden muss.

Besonders sicher wird die Schaltstange fixiert, wenn das Deckblech gemäß Anspruch 10 komplementär zum Außenumfang der Schaltstange ausgebildet ist. Es lässt sich dann umlaufend mit dieser verbinden und ermöglicht somit eine sichere Kraftübertragung.

Die Erfindung umfasst weiterhin ein Auflage, welche nicht mittig zwischen den Gabelenden angeordnet ist, sondern von der Mitte versetzt. Diese asymmetrische Anordnung ermöglicht die Verwendung der Erfindung auch bei einer besonders beengten Einbausituation, wenn also radial von der Gangwelle kein ausreichender Einbauraum zur Verfügung steht.

Zusammenfassend ermöglicht die Erfindung die Verwendung von komplett spanlos hergestellten Schaltgabeln, insbesondere von Schaltgabeln, die aus

Zusammenfassend ermöglicht die Erfindung die Verwendung von komplett spanlos hergestellten Schaltgabeln, insbesondere von Schaltgabeln, die aus Dünnblech hergestellt sind, dessen Stärke weniger als 4mm beträgt. Zusätzliche Versteifungsmaßnahmen der Schaltgabel sind nicht erforderlich; sie sind aber bei sehr hohen Beanspruchungen zusätzlich einbringbar.

### Kurze Beschreibung der Zeichnungen

Die Erfindung wird nachfolgend anhand von Ausführungsbeispielen näher erläutert. Es zeigen:
- Figur 1: eine perspektivische Ansicht einer erfindungsgemäßen Schaltgabel aus Blech,
- Figur 2: einen Querschnitt einer erfindungsgemäßen Schaltgabel,
- Figur 3: einen Längsschnitt der Schaltgabel nach Figur 2 entlang der Schnittlinie III-III,
- Figur 4: eine Aufsicht der Schaltgabel nach Figur 1.

### Detaillierte Beschreibung der Zeichnungen

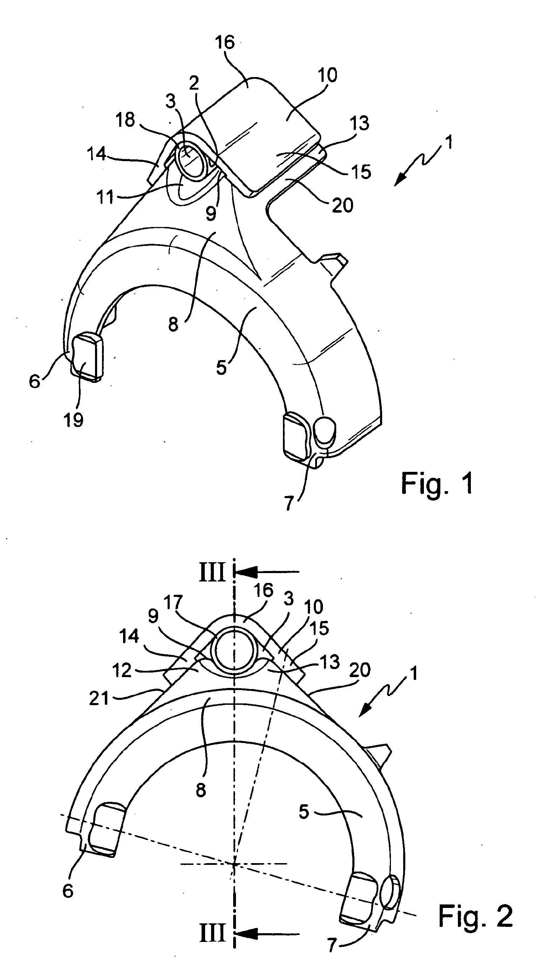

Das Ausführungsbeispiel einer erfindungsgemäßen Schaltgabel 1 in Figur 1 weist einen gabelförmigen Grundkörper 5 und eine Führung 2 mit einer Führungsöffnung 3 für eine Schaltstange auf. Der gabelförmige Grundkörper 5 ist ein Blechformteil mit Gabelenden 6 und 7, die mit Gleitschuhen 19 versehen sind, wobei der Grundkörper 5 eine Schaltmuffe (nicht dargestellt) umgreift. Zwischen den Gabelenden 6, 7 ist eine Basis 8 angeordnet, über welche der Grundkörper 5 an die Schaltstange angebunden ist. Wie aus Figur 2 hervorgeht, ist die Basis nicht symmetrisch zwischen den Gabelenden 6, 7 angeordnet, sondern zum Gabelende 6 versetzt.

Der Grundkörper 5 ist topfförmig ausgebildet, und die Basis 8 erstreckt sich in axialer Richtung über die topfförmigen Gabelenden 6, 7 hinaus. Eine axial verlaufende Nut 11 ist Teil der Basis 8 und bildet eine Auflage 9 für die Schaltstange 4. Seitlich der Nut schließen sich jeweils Flanken 12, 13 an. Die Flanken 12, 13 sind eben ausgebildet sowie in Richtung der Gabelenden 6, 7 ausgerichtet, und sie münden tangential in den gabelförmigen Grundkörper 5.

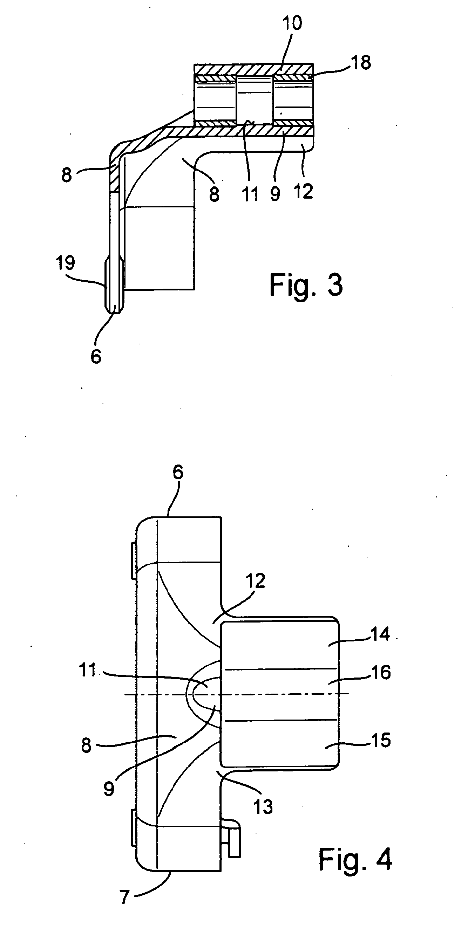

An den Flanken 12, 13 ist ein Deckblech 10 angeordnet, so dass ein es die Auflage 9 dachartig umgibt und ein Führungsöffnung 3 bildet. Die Flanken 12, 13 und das Deckblech 10 bilden somit die Führung 2. Die Auflage 9 und das Deckblech 10 sind derart geformt, dass sie entweder mit der Schaltstange oder mit einem Lager 18, das, wie aus Figur 3 hervorgeht, in der Führungsöffnung 3 angeordnet ist, eine formschlüssige Verbindung bilden. Dabei führt die Führungsöffnung 3 längs durch die Führung 2 hindurch. Anstatt des Lagers kann auch ein einfacher Hohlkörper 17 verwendet werden, der als ein Adapter die Anbindung der Schaltstange an die Schaltgabel 1 sicher stellt.

Die Flanken 12, 13 können Schweißpunkte aufweisen, über welche das Deckblech 10 besonders leicht mit den Flanken 12, 13 verbindbar ist. Die Schweißpunkte werden dann beispielsweise mittels eines Punktschweißverfahrens abgeschmolzen, und somit werden das Deckblech 10 und die Flanken 12, 13 stoffschlüssig miteinander verbunden. Dazu ist die dargestellte Schaltgabel 1 besonders geeignet, da das Deckblech einen mittleren Teilabschnitt 16 und zwei äußere Teilabschnitte 14, 15 aufweist, wobei die äußeren Teilabschnitte 14, 15 jeweils eben sind und somit alle Schweißverbindungen eines Teilabschnitts in einer Ebene liegen.

Es ist nicht erforderlich, dass das Deckblech 10 die Flanken 12, 13 vollständig überdeckt. Aus Gründen der Gewichtsersparnis ist es ausreichend, wenn eine sichere Verbindung mit den Flanken 12, 13 herstellbar ist, dass das Deckblech 10 nur teilweise die Flanken 12, 13 bedeckt und somit nicht vom Deckblech 10 überdeckte Flankenrandbereiche 20, 21 ausgebildet sind.

### Bezugszeichen

- 1: Schaltgabel
- 2: Führung
- 3: Führungsöffnung
- 4: nicht vergeben
- 5: gabelförmiger Grundkörper
- 6: Gabelende
- 7: Gabelende
- 8: Basis
- 9: Auflage
- 10: Deckblech
- 11: Nut
- 12: Flanke
- 13: Flanke
- 14: äußerer Teilabschnitt
- 15: äußerer Teilabschnitt
- 16: mittlerer Teilabschnitt
- 17: Hohlkörper
- 18: Lager
- 19: Gleitschuh
- 20: Flankenrandbereich
- 21: Flankenrandbereich

## Patentansprüche

1. Schaltgabel (1), bestehend aus einer Führung (2) mit einer Führungsöffnung (3) für eine Schaltstange und einem gabelförmigen Grundkörper (5) aus Blech mit zwei gegenüberliegenden Gabelenden (6, 7) und einer zwischen diesen angeordneten Basis (8), wobei die Basis (8) eine Auflage (9) für die Schaltstange aufweist, die mit einer dem Querschnitt der Schaltstange angepassten Nut (11) versehen ist, und **dadurch gekennzeichnet, dass** die Auflage (9) und ein separat hergestelltes, mit der Auflage (9) fest verbundenes Deckblech (10) die Führung (2) bilden.

2. Schaltgabel nach Anspruch 1, **dadurch gekennzeichnet, dass** in der Führungsöffnung (3) ein Lager (18) angeordnet ist.

3. Schaltgabel nach einem der vorhergehenden Ansprüche, **dadurch gekennzeichnet, dass** die Auflage (9) axial über die Ebene der Gabelenden (6, 7) vorsteht.

4. Schaltgabel nach einem der vorhergehenden Ansprüche, **dadurch gekennzeichnet, dass** der gabelförmige Grundkörper (5) topfförmig ausgebildet ist.

5. Schaltgabel nach Anspruch einem der vorhergehenden Ansprüche, **dadurch gekennzeichnet, dass** die in der Auflage (9) vorgesehene axial verlaufende Nut (11) als Teilsegment eines Zylinders ausgebildet ist.

6. Schaltgabel nach Anspruch 5, **dadurch gekennzeichnet, dass** die Auflage (9) Flanken (12, 13) aufweist, welche in Richtung der Gabelenden (6, 7) abgewinkelt sind.

7. Schaltgabel nach Anspruch 6, **dadurch gekennzeichnet, dass** die Flanken (12, 13) als ebene Flächen ausgebildet sind und im Querschnitt gesehen tangential in den gabelförmigen Grundkörper (5) übergehen.

8. Schaltgabel nach Anspruch 7, **dadurch gekennzeichnet, dass** die Flanken (12, 13) einen etwa rechten Winkel bilden.

9. Schaltgabel nach Anspruch 6, **dadurch gekennzeichnet, dass** das Deckblech (10) mit den Flanken (12, 13) fest verbunden ist.

10. Schaltgabel nach Anspruch 5, **dadurch gekennzeichnet, dass** das Deckblech (10) im Querschnitt gesehen aus drei Teilabschnitten (14, 15, 16) besteht, wobei die beiden äußeren Teilabschnitte (14, 15) gerade verlaufen und der mittlere Teilabschnitt (16) eine zur Schaltstange komplementäre Kontur aufweist.

11. Schaltgabel nach Anspruch 1, **dadurch gekennzeichnet, dass** in der Führungsöffnung (3) die Schaltstange von einem Hohlkörper (17) umgeben ist, der mit dem Deckblech (10) und der Auflage (9) verbunden ist:

12. Schaltgabel nach Anspruch 1, **dadurch gekennzeichnet, dass** die Auflage (9) nicht mittig auf dem gabelförmigen Grundkörper (5) angeordnet ist.

## Claims

1. Shift fork (1), composed of a guide (2) with a guide opening (3) for a shift rod and a fork-shaped base body (5) composed of sheet metal with two opposite fork ends (6, 7) and with a base (8) which is arranged between said fork ends (6, 7), the base (8) having a support (9) for the shift rod, which support (9) is provided with a groove (11) which is matched to the cross section of the shift rod, and **characterized in that** the support (9) and a cover plate (10) which is manufactured separately and is fixedly connected to the support (9) form the guide (2).

2. Shift fork according to Claim 1, **characterized in that** a bearing (18) is arranged in the guide opening (3).

3. Shift fork according to one of the preceding claims, **characterized in that** the support (9) projects axially beyond the plane of the fork ends (6, 7).

4. Shift fork according to one of the preceding claims, **characterized in that** the fork-shaped base body (5) is of pot-shaped design.

5. Shift fork according to one of the preceding claims, **characterized in that** the axially running groove (11) which is provided in the support (9) is formed as a partial segment of a cylinder.

6. Shift fork according to Claim 5, **characterized in that** the support (9) has flanks (12, 13) which are angled in the direction of the fork ends (6, 7).

7. Shift fork according to Claim 6, **characterized in that** the flanks (12, 13) are formed as planar surfaces and, as viewed in cross section, merge tangentially into the fork-shaped base body (5).

8. Shift fork according to Claim 7, **characterized in that** the flanks (12, 13) form an approximately right angle.

9. Shift fork according to Claim 6, **characterized in that** the cover plate (10) is fixedly connected to the flanks (12, 13).

10. Shift fork according to Claim 5, **characterized in that** the cover plate (10), as viewed in cross section, is composed of three partial sections (14, 15, 16), with the two outer partial sections (14, 15) running straight and the central partial section (16) having a complementary contour to the shift rod.

11. Shift fork according to Claim 1, **characterized in that,** in the guide opening (3), the shift rod is surrounded by a hollow body (17) which is connected to the cover plate (10) and to the support (9).

12. Shift fork according to Claim 1, **characterized in that** the support (9) is arranged non-centrally on the fork-shaped base body (5).

## Revendications

1. Fourchette de boîte de vitesses (1), constituée d'un guide (2) avec une ouverture de guidage (3) pour une tringle de changement de vitesse et un corps de base (5) en tôle en forme de fourche avec deux extrémités de fourche opposées (6, 7) et une base (8) disposée entre celles-ci, la base (8) présentant un appui (9) pour la tringle de changement de vitesse, lequel est pourvu d'une rainure (11) adaptée à la section transversale de la tringle de changement de vitesse, et **caractérisée en ce que** l'appui (9) et une tôle de recouvrement (10) fabriquée séparément et connectée fixement à l'appui (9) forment le guide (2).

2. Fourchette de boîte de vitesses selon la revendication 1, **caractérisée en ce que** dans l'ouverture de guidage (3) est disposé un palier (18).

3. Fourchette de boîte de vitesses selon l'une quelconque des revendications précédentes, **caractérisée en ce que** l'appui (9) dépasse axialement au-delà du plan des extrémités de fourche (6, 7).

4. Fourchette de boîte de vitesses selon l'une quelconque des revendications précédentes, **caractérisée en ce que** le corps de base en forme de fourche (5) est réalisé en forme de pot.

5. Fourchette de boîte de vitesses selon l'une quelconque des revendications précédentes, **caractérisée en ce que** la rainure (11) s'étendant axialement prévue dans l'appui (9) est réalisée sous forme de segment partiel d'un cylindre.

6. Fourchette de boîte de vitesses selon la revendication 5, **caractérisée en ce que** l'appui (9) présente des flancs (12, 13) qui sont coudés dans la direction des extrémités de fourche (6, 7).

7. Fourchette de boîte de vitesses selon la revendication 6, **caractérisée en ce que** les flancs (12, 13) sont réalisés sous forme de surfaces planes et se prolongent en section transversale tangentiellement dans le corps de base en forme de fourche (5).

8. Fourchette de boîte de vitesses selon la revendication 7, **caractérisée en ce que** les flancs (12, 13) forment approximativement un angle droit.

9. Fourchette de boîte de vitesses selon la revendication 6, **caractérisée en ce que** la tôle de recouvrement (10) est connectée fixement aux flancs (12, 13).

10. Fourchette de boîte de vitesses selon la revendication 5, **caractérisée en ce que** la tôle de recouvrement (10) se compose, vue en section transversale, de trois portions partielles (14, 15, 16), les deux portions partielles extérieures (14, 15) s'étendant en ligne droite et la portion partielle centrale (16) présentant un contour complémentaire de la tringle de changement de vitesse.

11. Fourchette de boîte de vitesses selon la revendication 1, **caractérisée en ce que** dans l'ouverture de guidage (3), la tringle de changement de vitesse est entourée par un corps creux (17) qui est connecté à la tôle de recouvrement (10) et par l'appui (9).

12. Fourchette de boîte de vitesses selon la revendication 1, **caractérisée en ce que** l'appui (9) n'est pas disposé centralement sur le corps de base en forme de fourche (5).
